# EUROPEAN PATENT SPECIFICATION

(11) **EP 0 609 465 B1**
(45) Date of publication and mention of the grant of the patent: **26.01.2000**
(21) Application number: 94908120.2
(22) Date of filing: 16.08.1993
(51) Int. Cl.: A23L 1/19, A23G 3/00

(54) **CUSTARD CREAM**
CUSTARDKREME
CREME PATISSIERE

(30) Priority: 21.08.1992 JP 24551892
(43) Date of publication of application: 10.08.1994
(73) Proprietor: FUJI OIL COMPANY, LIMITED, Osaka-shi, Osaka-fu 542 (JP)
(72) Inventor: INAYOSHI, Kuniaki, Sennan-shi, Osaka 590-05 (JP); YABUUCHI, Sayoko, Matsubara-shi, Osaka 580 (JP)
(74) Representative: Baverstock, Michael George Douglas
(86) International application number: PCT/JP93/01147
(87) International publication number: WO 94/04044

(56) References cited:
- JP-A- 2 031 647
- JP-A- 4 131 060
- JP-A- 5 030 911
- JP-A- 48 040 975
- JP-A- 63 044 841
- DATABASE WPI Section Ch, Week 7721 Derwent Publications Ltd., London, GB; Class D13, AN 77-37361Y XP002000115 & JP-A-52 047 953 (FUJI OIL KK) , 16 April 1977

## Description

### TECHNICAL FIELD

The present invention relates to a custard cream, the body (solidified shape) of which is formed by utilizing crystallizability of an oil-and-fat containing not less than 70% of SUS type triglycerides. Thereby, according to the present invention, there can be provided a high grade custard cream using no starch and having good melting properties in the mouth and a smooth texture.

### PRIOR ART

A body of a custard cream is generally composed of polysaccharides such as starch (soft flour), gelatinizing agent and the like and therefore the custard cream has such defects as sticky and rough mouth feel and very inferior melting properties in the mouth. In addition, although a foamable oil-in-water emulsion, that is, a foamable custard cream, a body of which is formed by adding ingredients such as egg-yolk and milk to a whipped cream and whipping them has been available for a few years, it has persistently the same properties as those of a conventional whipped cream, that is a weak taste and poor body due to the relationship with over-run and it has no resistance to heat.

JP-A 5-30911 describes an oil-in-water emulsion containing 10 to 60% by weight of a fat-and-oil, said oil in water emulsion which comprises 1 to 54% by weight of lauric type oil-in-fat, 0.3 to 27% by weight of fat-and-oil containing linoleic acid or linolenic acid at the 2-position of the triglyceride and a saturated fatty acid having a number of carbon atoms not less than 16 at the 1- and 3- positions of 14 triglyceride.

JP-A 48-40975 describes a process for successively producing a fat-and-oil enriched cream-like foodstuff containing not less than 10% of fat-and-oil which comprises mixing main raw materials of starch, milk product, solid oil-and-fat, emulsifier, water and the like with other seasoning materials and the like at the same time to dissolve them, subjecting them to mixing, heat gelatinization and cooling, and subsequently subjecting the mixture to further mixing and to emulsification. The product is thus a flour paste and not a custard cream.

JP-A-52-47953 describes an emulsion prepared by emulsifying a mixture composed of edible oil and fat, solid skimmed milk and water in the presence of a nonionic emulsifier to obtain an oil/water emulsion. Egg, sugar and optionally pigment, perfume, etc. are added to the emulsion and a pudding prepared conventionally.

On the other hand, there has never been known previously a custard cream, a body of which is formed by utilizing crystallizability of an oil-and-fat.

### OBJECTS OF THE INVENTION

The object of the present invention is to obtain a custard cream-like foodstuff having good melting properties in the mouth and smooth texture by utilizing crystallizability of an oil-and-fat without using polysaccharides such as starch (soft flour) and gelatinizing agents and without forming a body utilizing foaming force as in the case of a whipped cream.

### DISCLOSURE OF THE INVENTION

In order to attain the above object, the present inventors studied intensively and, as the result, found that a custard cream in which no polysaccharides such as starch, gelatinizing agent and the like are used as a body forming agent can be obtained by utilizing crystallizability of an oil-and-fat rich in SUS type triglycerides. This custard cream having an oil-and-fat body is a novel custard cream having much better melting properties in the mouth and extremely smooth texture, different from those of a custard cream having a starch body, including a custard cream-like foodstuff and custard-flavored cream. The present invention is explained in detail below.

Since an oil-and-fat rich in SUS type triglycerides has inherently such properties that stability of the emulsified state is extremely low and the thickened stated (plastic state) is easy to form, it has been said to be unsuitable for preparing an oil-in-water emulsion composition. Thus, the present inventors studied this thickened stated and, by using a daringly thickened state which was thought to be defective, succeeded in obtaining a custard cream which utilizes crystallizability without using polysaccharides such as starch and gelatinizing agent.

The present invention relates to a custard cream which comprises utilizing the crystallizability of an oil-and-fat containing not less than 70% (referred to as weight % hereinafter) of SUS type triglycerides and having not less than 70% of SFC at 5 °C and not less than 55% of SFC at 15 °C. More preferably, the present invention relates to a custard cream wherein the number of carbon atoms of the fatty acid residues in a 1,3-disaturated triglyceride of the SUS type triglyceride is 16 and/or 18.

Examples of the oil-and-fat rich in SUS triglycerides are palm oil, illipe butter and shea butter, and hardened or fractionated oil-and-fat thereof, and interesterified butter obtained by introducing a saturated fatty acid at the 1,3-positions of an oil-and-fat rich in unsaturated fatty acids at the 2-position. The term SUS type triglyceride refers to a 2-unsaturated-1,3-disaturated triglyceride, and the number of carbon atoms of fatty acid residue therein is 8 to 22 (a small amount of short chain fatty acid may be contained therein), 16 and/or 18 being most preferable. Examples of the 2-positional unsaturated fatty acid are oleic acid, linoleic acid and linolenic acid.

In addition, although a small amount of other kinds of oil-and-fat raw material may be added to the oil-and-fat rich in SUS type triglycerides, the proportion added may be up to 10% and, when the proportion exceeds 10%, there may be cases where a thickened state, that is, plastic state becomes incomplete due to non-uniform crystallizability of the oil-and-fat or it takes a longer time to reach a plastic state. In order to give sharper melting properties, formulation is performed so that the SFC of the oil-and-fat as a whole is not less than 70% at 5 °C and not less than 55% at 15 °C. The content of the oil-and-fat in the custard cream of the present invention is 15 - 50%, preferably 15 to 35% based on the total weight of the cream. When the oil-and-fat is used in an amount of less than 15%, the plastic state is incomplete and, when used in an amount of more than 50%, a good taste custard cream cannot be obtained due to a strongly oily feel.

Yolk is added mainly to give custard flavor, but since the gel properties of yolk also have more or less relationship to body properties as a custard cream, yolk is essential to a custard cream. Usually, in the present invention, commercially available liquid yolk may be used or a fresh egg may be broken to take only the yolk, and the amount of yolk to be added may be optionally selected depending upon one's liking for custard flavor, within the range 3 to 20%. However, when a sterilizing treatment such as ultra-high temperature pasteurization is carried out on preparation of the present custard cream, there is a problem that scorching occurs in the heat exchanger of the sterilizing apparatus when the content of yolk is too high. Therefore, in such cases, pre-modified yolk such as lyophilized yolk, sweetening and heating-modified yolk and enzyme-treated yolk may be used.

Non-fat milk solids are necessary to stabilize the emulsified state of an oil-in-water emulsion in addition to imparting milk flavor to the custard cream. Examples of non-fat solids are skim milk powder, whole milk powder, raw cream and sweetened condensed milk. Alternatively, skim milk powder or whole milk powder may be Maillard-treated. Such non-fat solids are used in an amount of 1 to 15%, preferably 3 to 10% based on the total weight. Sugars are essential for imparting flavor as a sweetener to a custard cream. Examples of sugars are sucrose, glucose, sorbitol, saccharificated reduced starch, maltose, lactose, fructose and various thick malt syrups.

These sugars are added in an amount of 5 to 30%, preferably 15 to 25% based on the total weight of the custard cream in order to act as a sweetener, different from a body former such as starch, gelatinizing agents and viscosity-increasing polysaccharides. Although the custard cream of the present invention can be prepared using no polysaccharides such as starch or gelatinizing agents these polysaccharides may be added to some extent in order to prevent loss of water and to maintain the stability of the texture. The amount of starch is preferably up to 5%.

In the custard cream of the present invention, it is preferable that various salts or emulsifiers are used. For salts, it is desirable that, for example, sodium hexametaphosphate, sodium secondary phosphate, sodium citrate, sodium polyphosphate and sodium bicarbonate are used alone or as a mixture of not less than two of them. Any emulsifiers may be used in so far as they are generally used for preparing oil-in-water emulsions, In particular, sucrose fatty acid ester, sorbitan fatty acid ester, lecithin, propylene glycol fatty acid ester, glycerin fatty acid ester and polyglycerin fatty acid ester may suitably be mixed to be used, wherein they are added to the oily phase or the aqueous phase in a proportion of 0.1 to 1% by weight based on the total weight of the emulsion.

The amount of water in the emulsion is preferably 20 to 70% by weight.

The custard cream of the present invention can be prepared according to the steps for preparing a field cream or imitation cream, and one example of preparation is explained below. Respective raw materials are pre-emulsified at 70 °C for 20 minutes and homogenized under the conditions of 0 to 150 kg/cm². The homogenate is then treated by ultra-high temperature heating (UHT), homogenized again under the conditions of 0 to 150 kg/cm², cooled and subjected to aging for about 48 hours. Aging time is longer in the case of the present custard cream than in the case of the conventional field cream because the present custard cream utilizes crystallizability of an oil-and-fat and it takes a longer time to reach the so-called thickened state, that is plastic state, comparing with the case of the conventional field cream.

The custard cream of the present invention can be used for preparing cream puffs, filling breads, cakes and the like, icing and preparing imitation flowers.

In the present invention, the body of a custard cream is formed by using an oil-and-fat rich in SUS type triglycerides and utilizing crystallizability of the oil-and-fat and the phenomenon upon formation of the body is thought to be as follows. Inherently, an oil-and-fat rich in SUS type triglycerides is used mainly as a vegetable oil-and-fat for chocolates, that is, as a hard butter, and the crystal pattern of the oil-and-fat is generally confirmed to include six patterns of types 1 to 6. Among these types, the stable state of type 5 is maintained in the present custard cream.

Respective custard creams obtained in the following Examples 1 and 2 were studied for crystal pattern by an X-ray diffraction method using a MXP-3 apparatus manufactured by MACSCIENCE Company, and it was found that the crystal pattern of both samples is type 5 (β₂ type) and the respective custard creams have a very stable crystal structure. These samples were cooled and stored for ten days in a refrigerator and their crystal pattern was studied by the same method. As a result, respective samples were found to maintain the stable state of the 5 type and to have good physical properties without change in physical properties such as loss of water and oil off.

The following Examples illustrate embodiments of the present invention, but they are merely illustrative and the scope of the present invention is not limited to them. In addition, parts and %s are represented by weight.

### Example 1

An oily phase for a custard cream (table 1) was prepared by warming an oil-and-fat to 70 °C and adding lecithin thereto to mix. Separately, an aqueous phase was prepared by warming water to about 60 °C, adding sodium hexametaphosphate thereto to dissolve, then dissolving or dispersing therein whole milk powder, yolk and sucrose. Then, the oily phase and aqueous phase were mixed and, if necessary, sucrose fatty acid ester and perfume were added thereto, the mixture was stirred to pre-emulsify at 65 to 70 °C for 20 minutes using a homomixer and homogenized under the conditions of 30 kg/cm². Thereafter, the homogenate was immediately treated at 140 to 145 °C for four seconds by UHT direct heat-sterilizing, homogenized again under the conditions of 40 kg/cm², cooled rapidly to about 10 °C and filled into a corrugated cardboard box in which a vinyl chloride bag had been laid. The filled homogenate had the viscosity of 0.25 Ns/m² (250 cps) and showed a liquid state.

These filled substances were subjected to aging in a refrigerator at 5 °C for about 48 hours to obtain a custard cream showing a plastic state. The viscosity at that time was not measurable due to the plastic state and hardness was 150 g/cm² by a rheometer (using a 10 φ plunger). The custard cream of the present invention is an oil-in-water emulsion having very good melting properties in the mouth and smooth texture, in which polysaccharides such as starch and gelatinizing agent are not used at all as shown in the formulations in the Table and a body is formed only by means of crystallizability of an oil-and-fat.

### Examples 2 and 3

Custard creams were prepared according to the same formulation and manner as those in Example 1 except that the oil-and-fat was varied and the composition of the oil-and-fat was different. As the result, custard creams were obtained which showed a plastic state of rheometer value of 120 g/cm² in the formulation of Example 2 (Table 1) and of rheometer value of 90 g/cm² in the formulation of Example 3 (Table 1). Although these custard creams did not have the same level of hardness as that in Example 1, they showed a plastic state and therefore had a softer body derived from crystallizability of the oil-and-fat. In addition, all samples of Examples 1 to 3 showed no change in hardness even after ten days and had good physical properties without water loss and oil off.

**Table 1**

| Formulation of custard cream (values represent weight % of total weight) | | | | |
|---|---|---|---|---|
| Raw material | Example 1 | | Example 2 | Example 3 |
| Oil-and-fat A (note 1) | 23.6 | | - | - |
| Oil-and-fat B (note 2) | - | | 23.6 | - |
| Oil-and-fat C (note 3) | - | | - | 23.6 |
| Yolk (note 4) | 15.0 | | 15.0 | 15.0 |
| Sucrose | 10.0 | | 10.0 | 10.0 |
| Whole milk powder | 8.5 | | 8.5 | 8.5 |
| Water | remainder | | remainder | remainder |
| Emulsifier (note 5) | 0.4 | | 0.4 | 0.4 |
| Salts (note 6) | 0.19 | | 0.19 | 0.19 |
| Perfume | 0.06 | | 0.06 | 0.06 |

| Melting point | SFC (5 °C) | SFC (15 °C) | Content of SUS type triglycerides in oil-and-fat | |
|---|---|---|---|---|
| Oil-and-fat A 30 °C | 90% | 80% | 80% | |
| Oil-and-fat B 33 °C | 85% | 70% | 80% | |
| Oil-and-fat C 39 °C | 90% | 80% | 83% | |

| | | | | |
|---|---|---|---|---|
| (Note 1, 2, 3) Oil-and-fat A: Middle-melting portions of palm oil Oil-and-fat B: Middle-melting portions of palm oil, cocoa butter substitute comprising fractionated shea butter Oil-and-fat C: Fractionated shea butter | | | | |
| (Note 4) Freezing-modified yolk (modified proportion: 45%) | | | | |
| (Note 5) Soy bean lecithin and sucrose fatty acid ester | | | | |
| (Note 6) Sodium hexamataphosphate, sodium bicarbonate, sodium citrate | | | | |

### Comparative Examples 1 to 3

Samples were obtained according to the same formulation and manner as those in Examples 1 to 3 except that the oil-and-fat was varied and the composition of the oil-and-fat was different. As the result, even at 72 hours after aging, the filled substances remained liquid, having approximately the same viscosity as that immediately after filling, and a plastic state was not attained, resulting in no custard creams.

From these facts, it is clear that the oil-and-fat to be used should essentially contain not less than 70 % of SUS type triglycerides and have an SFC of not less than 70% at 5 ^{o}C and not less than 55% at 15 °C. That is, selection of the oil-and-fat is important in the present custard creams, the body of which is formed by utilizing crystallizability of the oil-and-fat.

**Table 2**

| Formulation of custard cream (values represent weight % of total weight) | | | | |
|---|---|---|---|---|
| Raw material | Comparative Example 1 | | Comparative Example 2 | Comparative Example 3 |
| Oil-and-fat T (note 1) | 23.6 | | - | - |
| Oil-and-fat U (note 2) | - | | 23.6 | - |
| Oil-and-fat V (note 3) | - | | - | 23.6 |
| Yolk | 15.0 | | 15.0 | 15.0 |
| Sucrose | 10.0 | | 10.0 | 10.0 |
| Whole milk powder | 8.5 | | 8.5 | 8.5 |
| Water | remainder | | remainder | remainder |
| Emulsifier | 0.4 | | 0.4 | 0.4 |
| Salts | 0.19 | | 0.19 | 0.19 |
| Perfume | 0.06 | | 0.06 | 0.06 |

| Melting point | SFC (5 °C) | SFC (15 °C) | Content of SUS type triglycerides in oil-and-fat | |
|---|---|---|---|---|
| Oil-and-fat T 36 °C | 90% | 85% | not more than 50% | |
| Oil-and-fat U 26 °C | 65% | 53% | 65% | |
| Oil-and-fat V 31 °C | 55% | 40% | not more than 50% | |

| | | | | |
|---|---|---|---|---|
| (Note 1, 2, 3) Oil-and-fat T: Isomerized hardened palm oil Oil-and-fat U: Middle-melting portions of palm oil Oil-and-fat V: Hardened rapeseed-palm mixed oil | | | | |

### Example 4 and Comparative Example 4

Samples were prepared according to the same formulation and manner as those in Examples 1 to 3 except that the oil-and-fat was varied and the composition of the oil-and-fat was different (Table 3). Experiments were carried out on an oil-and-fat rich in SUS type triglycerides obtained by mixing other oil-and-fat, that is, hardened coconut oil in middle-melting portions of palm oil at different mixing rates. As a result, the sample of Example 4 in the case of a mixed oil-and-fat containing an oil-and-fat other than triglyceride at 10% gave a custard cream showing a plastic state of rheometer value of 70 g/cm², while the sample of Comparative Example 4 in the case of a mixed oil-and-fat containing an oil-and-fat other than triglyceride at 15% gave a liquid having approximately the same viscosity as that immediately after filling and a custard cream showing a plastic state was not obtained.

**Table 3**

| Formulation of custard cream (values represent weight % of total weight). | | | |
|---|---|---|---|
| Raw material | | Example 4 | Comparative Example 4 |
| Oil-and-fat W (note 1) | | 23.6 | - |
| Oil-and-fat X (note 2) | | - | 23.6 |
| Yolk | | 15.0 | 15.0 |
| Sucrose | | 10.0 | 10.0 |
| Whole milk powder | | 8.5 | 8.5 |
| Water | | remainder | remainder |
| Salts | | 0.19 | 0.19 |
| Perfume | | 0.06 | 0.06 |

| Melting point | SFC (5 °C) | SFC (15 °C) | Content of SUS type triglycerides in oil-and-fat |
|---|---|---|---|
| Oil-and-fat W 29 °C | 85% | 75% | 70% |
| Oil-and-fat X 28 °C | 78% | 69% | 66% |

| | | | |
|---|---|---|---|
| (Note 1, 2) Oil-and-fat W: Middle-melting portions of palm oil 90% + hardened coconut oil 10% Oil-and-fat X: Middle-melting portions of palm oil 85% + hardened coconut oil 15% | | | |

From this Comparative Example, it is thought that, when another oil-and-fat raw material is added to an oil-and-fat rich in SUS type triglycerides, the upper limit of the proportion to be added is 10% and, when added in an amount above 10%, a plastic state becomes incomplete due to non-uniformization and inhibition of crystallization of the oil-and-fat.

As explained above, according to the present invention, there can be provided a custard cream having very good melting properties in the mouth and smooth texture by utilizing crystallizability of an oil-and-fat without using polysaccharides such as starch or gelatinizing agents and without forming a body by foaming force as in the case of whipped cream.

## Claims

1. A custard cream which is an oil-in-water emulsion having a thickened plastic state, comprising 15 to 50% by weight of oil, 20 to 70% by weight of water, 3 to 20% by weight of egg-yolk and 1 to 15% by weight of non-fat milk solids wherein the oil comprises not less than 70% by weight of 2-unsaturated -1, 3-disaturated triglycerides (SUS) and has a solid fat content (SFC) of not less than 70% by weight at 5°C, and not less than 55% by weight at 15°C.

2. The custard cream according to claim, 1, wherein the number of carbon atoms of the fatty acid in the 2-unsaturated 1,3-disaturated triglyceride (SUS) is 16 and/or 18.

3. A process for producing the custard cream of claim 1 or claim 2 which comprises formulating an oil-in-water emulsion containing as main ingredients 15 to 50% by weight of the oil, 20 to 70% by weight of water, 3 to 20% by weight of egg-yolk and 1 to 15% by weight of non-fat milk solids.

4. The process for producing a custard cream of claim 3, wherein the custard cream contains 5 to 30% by weight of sugars and 0 to 5% by weight of starch as ingredients.

5. Use of a custard cream according to claim 1 or claim 2 or when prepared by the process according to claim 3 or claim 4 in the production of a food product.

## Patentansprüche

1. Custard-Creme, die eine Öl-in-Wasser-Emulsion mit einem verdickten plastischen Zustand ist, umfassend 15 bis 50 Gew.-% Öl, 20 bis 70 Gew.-% Wasser, 3 bis 20 Gew.-% Eigelb und 1 bis 15 Gew.-% von Nicht-Milch-Feststoffen, worin das Öl nicht weniger als 70 Gew.-% 2-ungesättigte -1,3-digesättigte Triglyceride (SUS) umfaßt und einen festen Fettgehalt (SFC) von nicht weniger als 70 % bei 5°C und nicht weniger als 55 Gew.-% bei 15°C aufweist.

2. Custard-Creme nach Anspruch 1, worin die Zahl der Kohlenstoffatome der Fettsäure in dem 2-ungesättigten, 1,3-digesättigten Triglycerid (SUS) 16 und/oder 18 ist.

3. Verfahren zur Erzeugung der Custard-Creme nach Anspruch 1 oder 2, umfassend das Formulieren einer Öl-in-Wasser-Emulsion, umfassend als Hauptbestandteile 15 bis 50 Gew.-% des Öls, 20 bis 70 Gew.-% Wasser, 3 bis 20 Gew.-% Eigelb und 1 bis 15 Gew.-% Nicht-Fett-Milchfeststoffe.

4. Verfahren zur Erzeugung einer Custard-Creme nach Anspruch 3, worin die Custard-Creme 5 bis 30 Gew.-% Zucker und 0 bis 5 Gew.-% Stärke als Bestandteile enthält.

5. Verwendung einer Custard-Creme nach Anspruch 1 oder 2 oder nach Herstellung des Verfahrens nach Anspruch 3 oder 4, zur Erzeugung eines Nahrungsproduktes.

## Revendications

1. Crème cuite qui est une émulsion huile-dans-eau ayant un état plastique épaissi, comprenant 15 à 50% en poids d'huile, 20 à 70% en poids d'eau, 3 à 20% en poids de jaune d'oeuf et 1 à 15% en poids de matières solides de lait non grasses, dans laquelle l'huile comprend moins de 70% en poids de triglycérides 2-insaturés -1, 3-disaturés (SUS) et a une teneur en matière grasse solide (SFC) de moins de 70% en poids à 5°C, et de moins de 55% en poids à 15°C.

2. Crème cuite suivant la revendication 1, dans laquelle le nombre d'atomes de carbone de l'acide gras dans le triglycéride 2-insaturé -1,3-disaturé (SUS) est de 16 et/ou 18.

3. Procédé de production de la crème cuite suivant l'une ou l'autre des revendications 1 et 2, qui comprend la formulation d'une émulsion huile-dans-eau contenant comme ingrédients principaux 15 à 50% en poids de l'huile, 20 à 70% en poids d'eau, 3 à 20% en poids de jaune d'oeuf et 1 à 15% en poids de matières solides de lait non grasses.

4. Procédé de production d'une crème cuite suivant la revendication 3, dans lequel la crème cuite contient 5 à 30% en poids de sucres et 0 à 5% en poids d'amidon comme ingrédients.

5. Utilisation d'une crème cuite suivant l'une ou l'autre des revendications 1 et 2 ou lorsque préparée par le procédé suivant l'une ou l'autre des revendications 3 et 4 dans la production d'un produit alimentaire.
